# EUROPEAN PATENT SPECIFICATION

(11) **EP 1 293 368 B1**
(45) Date of publication and mention of the grant of the patent: **31.05.2006**
(21) Application number: 02015900.0
(22) Date of filing: 17.07.2002
(51) Int. Cl.: B60J 5/06

(54) **Device for opening and closing a roto-translating door for motor vehicles**
Vorrichtung zum Öffnen und Schliessen einer Dreh-Schiebetür für Kraftfahrzeuge
Dispositif d'ouverture et de fermeture pour une porte rotative-coulissante pour véhicule

(30) Priority: 31.07.2001 IT TO20010757
(43) Date of publication of application: 19.03.2003
(73) Proprietor: O.C.L.A.P. S.R.L., 10060 Piscina (TO) (IT)
(72) Inventor: Losito, Pietro, 10060 Frossasco (TO) (IT)
(74) Representative: Robba, Pierpaolo

(56) References cited:
- EP-A- 0 589 158
- EP-A- 0 828 049
- DE-A- 2 309 313
- DE-A- 3 400 753
- DE-A- 19 933 366

## Description

The present invention relates to a roto-translating door for vehicles.

More particularly, the invention relates to a device for opening and closing a roto-translating door for motor vehicles, such as vans and small buses.

Small vehicles, contrary to big coaches, normally are equipped with manually actuated sliding side doors, mounted on suitable tracks.

Roto-translating doors, equipped with a wing hingedly connected to a pair of semicircular arms rotating about a vertical axis actuated by a motor-driven system, are on the contrary used on bigger vehicles, since they are more cumbersome, more complex to install and hence more expensive.

Moreover such doors must be equipped with a safety system intervening, after door closing, to secure the wing in closed position.

Many vehicle doors with their relative closing systems are known from the prior art.
For instance, DE 34 00 753, representing the most relevant prior art, discloses an outer swing door for vehicles and its actuating device. The outer swing door is equipped with a drive device, a rotary column and a pivoting arm, at least one first point of the door being guided along an arc of a circle, another point being guided at least partially in a straight line, and the first point being connected to the pivoting arm. The actuating device of the outer swing door has the rotary column, a drive of the rotary column and the pivoting arm connected to the door, there being further connected to the door a guide means which guides the connection point in a straight line during at least some of the movement.
DE 23 09 313 describes an arrangement for mounting a vehicle door comprising two arms pivotally connected to the door and to the vehicle body, the arm being of variable length to permit the door to turn about one edge adjacent the vehicle opening. The arm comprises telescopic parts spring-loaded to facilitate opening and closing of the door. The door edge engages a lip on the vehicle body and the edge is held closed by a latch.
EP 0 589 158 discloses a remote-controllable lock, particularly for motor-vehicle doors, with a portable transmitter and with a fixed reception device which converts permissible signals emitted by the transmitter into switching commands for lock parts. The lock has a rotary latch which cooperates with a locking bolt or the like and which is detained in a locking position by a detent pawl. A handle is connected via an electrical line to a motive actuating drive which, when the handle is actuated, by means of a displaceable actuator, by acting on the detent pawl, displaces the detent pawl into its unlocking position when a switch arranged in the electrical line is activated by an appropriate switching command of the reception device or of a device connected to the latter.
EP 0 828 049 describes a locking device, in particular for vehicle doors, including at least one handle with intermediate circuiting of a coupling apparatus connected via connecting elements with a lock element which can be driven by an actuator, in particular a latch pawl. When the actuator drive is activated, via the coupling device having a servo device, a transfer of force can be executed by the at least one handle on the locking element.
DE 199 33 366 discloses a locking device for doors, in particular of vehicles, having an inside door opener and an outside door handle which can be used to actuate at least one lock for locking the door. In order to reduce the mechanical complexity, only the inside door opener acts mechanically on the lock, and the outside door handle acts via an electric control on an actuating drive, which actuates the lock.

A known safety system, commonly used on roto-translating doors of buses, uses a wing-lifting mechanism. The lifting mechanism is operated at the end of the rotary motion, when the wing is closed, to lift the wing to a safety position in which a plurality of projecting side pins engage corresponding seats in the door frame. To open the door, it is necessary that the same lifting mechanism lowers the wing, thereby releasing the side pins from the corresponding seats; then, the rotating mechanism is operated.

However, such a system has some disadvantages. The lifting mechanism, even if it can be embodied into the rotating mechanism, is anyway a rather complex and cumbersome mechanism, especially in case of large doors. The complexity of such mechanism negatively affects manufacturing costs and reliability and, moreover, considerably adds to the weight of the whole system.

The above disadvantages make scarcely convenient applying doors equipped with such a safety system to medium or small vehicles: indeed, such vehicles have a necessarily reduced cost and, of course, have less room available for the actuating systems.

Thus, the present invention aims at solving the problem of how to obtain a roto-translating door that can be applied to any kind of vehicle and that is equipped with a particularly simple and effective safety closure system.

The above and other objects are achieved by the roto-translating door system as claimed in the appended claims.

Advantageously, according to the invention, a rotating mechanism is provided that is capable of carrying out a peculiar movement for wing opening and closing. Such mechanism, associated with a simple mechanical blocking system, ensures the wing closing and prevents possible unwanted openings.

The device made in accordance with the invention has a very simple structure and has good safety characteristics, since it can be easily disconnected should the need arise.

The above and other objects of the invention will become more apparent from the following description of a preferred embodiment, with reference to the accompanying drawings, in which:
- Fig. 1 is a perspective view of a roto-translating door manufactured in accordance with the invention;
- Fig. 2 diagrammatically shows, in a top view, the opening and closing movement of the door shown in Fig. 1;
- Figs. 3 and 4 show a first and a second detail, respectively, of the movement scheme shown in Fig. 2;
- Figs. 5, 6 and 7 show, in side view, three details of a mechanical lock system for the door shown in Fig. 1;
- Fig. 8 is a sectional top view of a detail of a mechanical blocking system for the door shown in Fig. 1; and
- Fig. 9 is a sectional top view of a mechanical lock for the door shown in Fig. 1.

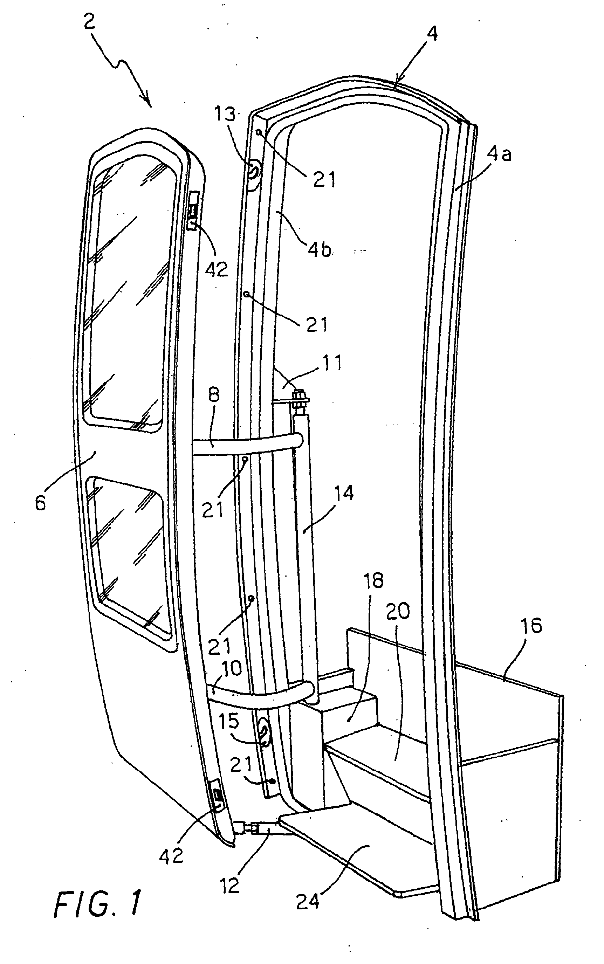

Referring to Fig. 1, a roto-translating door 2 for a vehicle side wall, not shown in the drawing, comprises a bearing frame 4, a wing 6 and the whole of the electro-mechanical equipment required for moving wing 6 with respect to frame 4.

Bearing frame 4 forms a ledge surface for wing 6, since its shape substantially corresponds with the external perimeter of wing 6. Moreover the frame carries arms 8, 10, 12 supporting wing 6, a rotating electromechanical assembly 18 for moving the arms, and a group of steps 16 comprising a moving step 24.

Bearing frame 4, made by metal box elements, has multiple holes 21, arranged along its perimeter, allowing its fastening to the body of a motor vehicle, e.g. a van or a minibus.

In the alternative, frame 4 can be already embodied into the vehicle body.

Moving wing 6 is pivotally connected to a pair of curved arms 8, 10, secured to a vertical bar 14 rotating about its axis, and it is also connected to a third, lower small arm 12. Arm 12 is to keep wing 6 in the proper position relative to the vehicle wall, during opening and closing movements, by setting a particular trajectory that will be described in detail hereinafter.

Vertical bar 14 is supported at its lower end by said electromechanical rotating assembly 18, which actually controls its rotation, and at its upper end by a bearing bracket 11 welded to one vertical jamb 4b of frame 4.

A group of steps 14, including a stationary step 20 and a moving step 24, is located in the lower portion of bearing frame 4 and projects towards the inside of the vehicle. The movement of moving step 24 is synchronised with the opening movement of wing 6, so that the step is horizontally tilted when the wing is being opened and is raised again to allow the wing to be closed.

Closing of wing 6, when it is moved against the frame, is ensured by a pair of mechanical locks 13, 15 located within jamb 4b and, on the opposite side, by a pair of projecting members 42, coupled with corresponding recesses formed in jamb 4a of frame 4, as it will be described in detail hereinafter. For safety reasons, opening of locks 13, 15 is moreover controlled by two safety handles, one of them being located inside and the other one outside the vehicle.

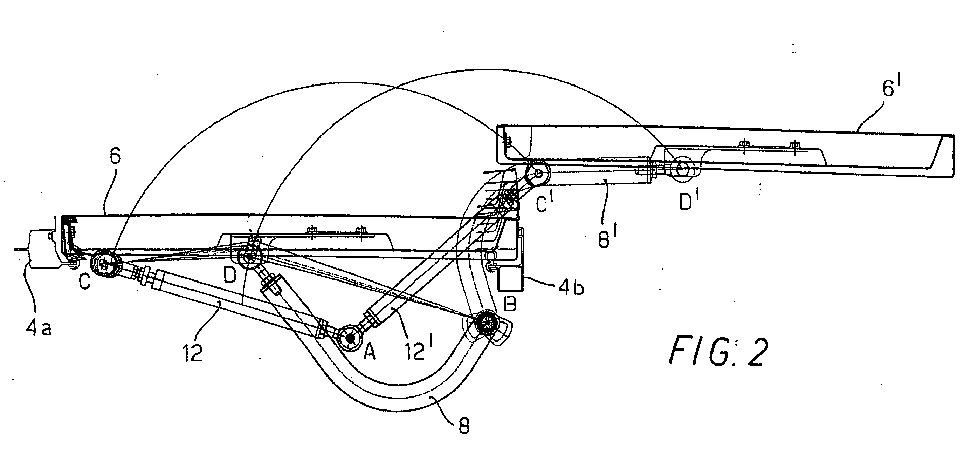

Fig. 2 schematically shows, in a top view, the trajectory of the opening and closing movement of wing 6 relative to frame 4. More particularly, the drawing shows a wing 6 in closed condition, borne by arms 8 and 12, and the same wing in open condition, denoted by reference numerals 6', 8' and 12'. Curved arm 10 is identical to curved arm 8 and performs the same movement, so that it cannot be seen in Fig. 2, being always hidden by arm 8. For sake of simplicity, to show the movement of wing 6, reference will be made to curved arm 8 and to lower arm 12 only.

The pivotal points of arms 8 and 12 form a trapezium, of which the shape changes as the wing position changes while the wing is moving. In Fig. 2, wing 6 in closed position forms trapezium A-B-C-D, whereas wing 6' in open position forms trapezium A-B-C'-D'. The two trapeziums have different shapes due to the different arm positions and, above all, they differ in respect of the length of one of the sides, since the length of lower arm 12 is not constant.

Indeed, arm 12 is an extensible arm that houses inside it a tension spring. More particularly, when the wing is in open position, arm 12 is retracted, whereas when the wing is closed arm 12 is extended. Distance A-C is therefore greater than distance A-C'.

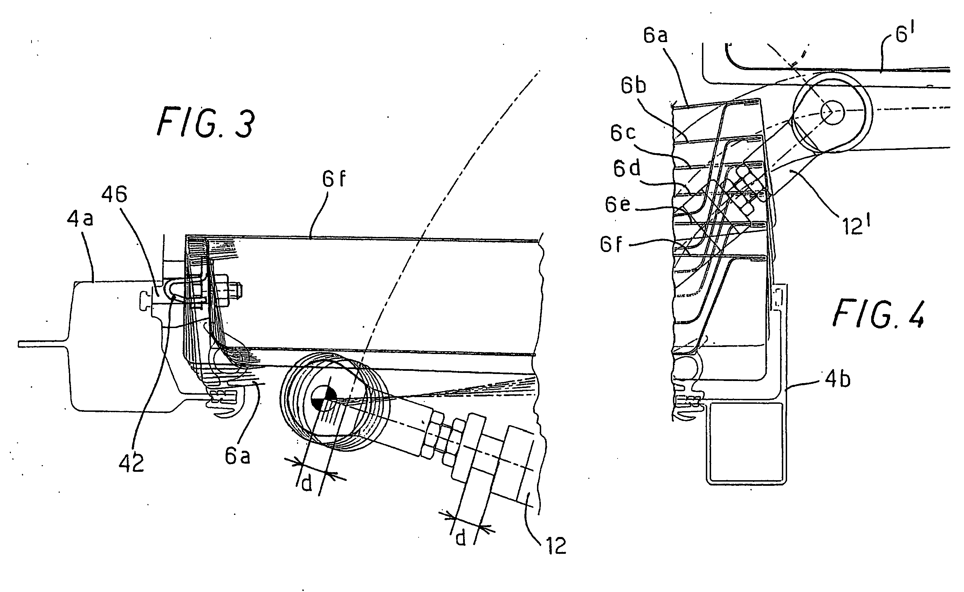

When arm 12 is retracted, wing 6 is not parallel with frame 4, i.e. with the side wall of the vehicle, but it is slightly inclined. Said slight inclination is retained until the leading wing portion arrives in contact with jamb 4a, as shown in detail in Figs. 3 and 4. At that point, extension of arm 12 by "d" allows wing 6 to become again parallel with frame 4 and to engage mechanical locks 13, 15 on the other jamb 4b.

More particularly, Figs. 3 and 4 show six different positions 6a to 6f taken by wing 6 in the end portion of the closing trajectory. Wing 6, when reaching frame 4, is in position 6a and is inclined relative to the frame. That inclination allows members 42 projecting from the wing (one of such members being shown in Fig. 3) to engage suitable seats 46 formed in jamb 4a of frame 4.

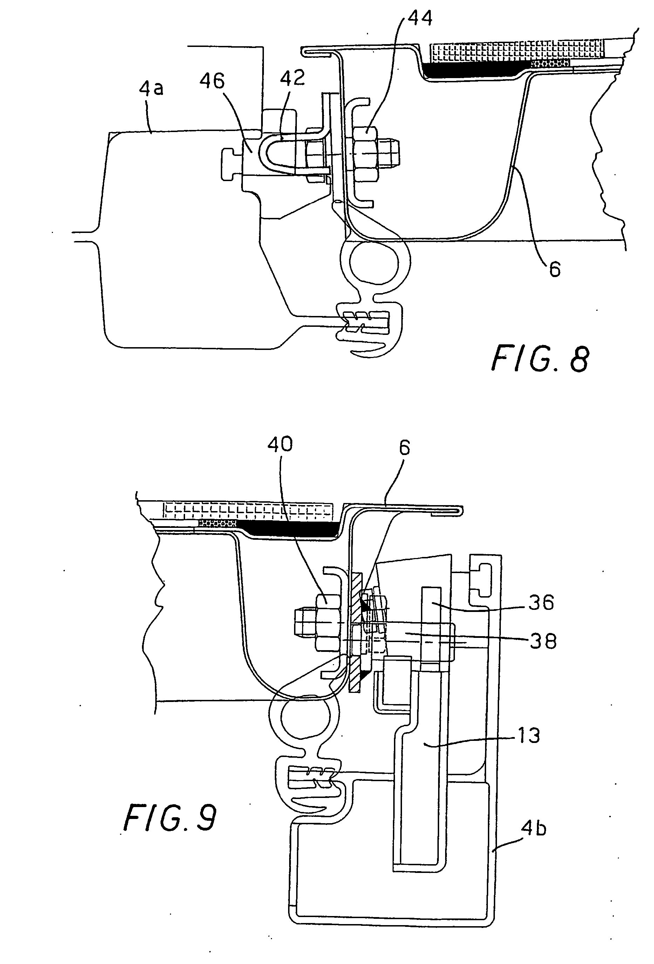

Fig. 8 shows in detail one of said projecting members 42, secured to wing 6 by means of a bolt-nut pair 44 and inserted into seat 46 formed in frame 4. Here, wing 6 is shown in closed position.

Subsequently, since electromechanical rotating assembly 18 forces arms 8 and 10 to close towards the inside, arm 12 is compelled to extend, thereby allowing the wing to take positions 6a, 6b, 6c, 6d, 6e and eventually closing position 6f. Lower arm 12 is internally provided with a tension spring, e. g. a helical spring, always tending to bring the arm back to its retracted position.

During closing movements 6a to 6f, the wing comes into contact with mechanical locks 13, 15, which are mechanically triggered thereby blocking the wing.

Fig. 9 shows, partly in cross section, a mechanical lock 13 provided with a clasp member 36 closed onto a pin 38 secured to wing 6 trough a nut 40.

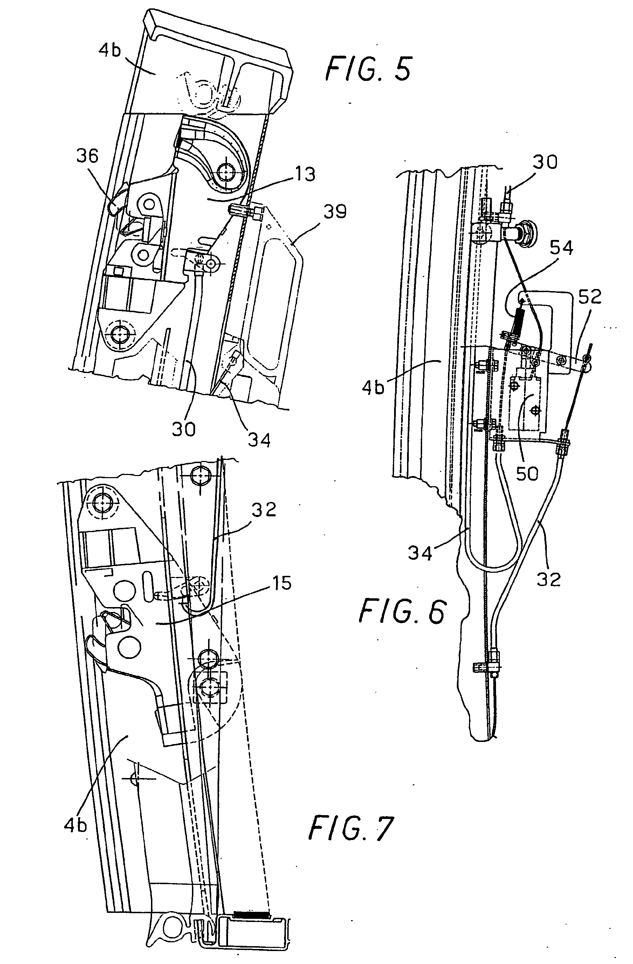

Figs. 5 to 7 show in detail mechanical locks 13 and 15 and an electro-magnet mechanism 50 for lock actuation. More particularly, lock 13, shown in Fig. 5, is located in the upper portion of jamb 4b of frame 4 and comprises a clasp member 36, the opening of which is controlled by electro-magnet 50 through a tie-rod 30. The inner handle 39 for safety lock opening, which is connected to a tie-rod 34, can be seen near lock 13.

Fig. 7 shows the second lock 15 located in the lower portion of frame jamb 4b. The release of that lock is controlled by tie-rod 32, also connected with electromagnet 50.

Fig. 6 shows in detail the electromagnet assembly 50 controlling release of locks 13 and 15. Electromagnet 50 controls the movements of a moving rod 52 to which tie-rods 30, 32 of the locks and tie-rod 34 of internal safety handle 39 are connected. When electromagnet 50 is not energised, moving rod 52 is brought back to its idle position by a return spring 54.

To open the door, it is sufficient to energise electromagnet 50 that releases locks 13 and 15, and then to actuate the electromechanical rotating assembly 18 of curved arms 8 and 10. The initial movement of such opening is greatly assisted by the force exerted by lower arm 12 that, thanks to its internal spring, tends to retract and to bring wing 6 to an inclined position relevant to frame 4.

## Claims

1. A device for opening and closing a rotatable and slidable door (2) for a wall of a vehicle, said door (2) comprising a ledge frame (4) and a moving wing (6) pivotally mounted onto a pair of curved arms (8, 10) actuated by a vertical bar (14) rotatable about its own axis, said wing (6) being further connected to a third arm (12) arranged to keep said wing (6) parallel to the vehicle side wall during part of the opening and closing movement, said third arm (12) being an extensible arm the extension of which allows said wing (6) to perform a partial rotation about a vertical axis passing through the pivot points of said wing (6) onto said curved arms (8, 10), said partial rotation allowing said wing (6) to contact, during an end portion of the closing movement, a first jamb (4a) of said ledge frame (4) and, subsequently, a second jamb (4b) of the same frame (4) **characterised in that** said device further comprises a first mechanical lock (13) located in the upper part of said second jamb (4b) and a second mechanical lock (15) located in the lower part of said second jamb (4b), said first and second mechanical locks being controlled by a same electro-magnet (50) through a first (34) and a second (32) tie-rod.

2. A device as claimed in claim 1, wherein said first and second mechanical locks (13, 15) are further controlled by at least one manually actuated safety handle.

3. A device as claimed in claim 1, wherein at least one of said mechanical locks (13, 15), located in an inner side of said second jamb (4a), is capable of engaging a corresponding pin (38) projecting from said wing (6).

4. A device as claimed in claim 3, wherein at least one of said mechanical locks (13, 15) is a clasp lock, the opening of which is controlled by said electromagnet (50).

5. A device as claimed in claim 1, wherein said third extensible arm (12) has inside it resilient means arranged to exert a force opposing to said extension.

6. A device as claimed in claim 5, wherein said resilient means comprise a tension spring.

7. A device as claimed in claim 1, wherein an inner side of said first jamb (4a) and a corresponding external side of said wing (6) are equipped with mutually engaging first (46) and second (42) coupling means, respectively.

8. A device as claimed in claim 7, wherein said first coupling means comprise at least a seat (46) and said second coupling means (42) comprise at lest a member (42) projecting from the edge of said wing (6), said projecting member (42) having such a size that it can enter said seat (46).

## Patentansprüche

1. Vorrichtung zum Öffnen und Schließen einer Dreh-Schiebetür (2) für eine Fahrzeugwand, wobei die Tür (2) einen Profilleistenrahmen (4) und einen beweglichen Flügel (6) umfaßt, der an einem Paar gekrümmter Arme (8, 10) schwenkbar montiert ist und von einer um ihre eigene Achse drehbaren vertikalen Stange (14) betätigt wird und jener Flügel (6) weiter mit einem dritten Arm verbunden ist, der angeordnet ist, um jenen Flügel (6) während eines Teils der Öffnungs- und Schließbewegung parallel zur Seitenwand des Fahrzeugs zu halten und jener dritte Arm (12) ein ausziehbarer Arm ist, durch dessen Verlängerung wird es jenem Flügel (6) ermöglicht, an den gekrümmten Armen (8, 10) eine Teildrehung um eine durch die Schwenkpunkte des Flügels (6) gehende vertikale Achse auszuführen und diese Teildrehung ermöglicht es dem Flügel (6), am Ende der Schließbewegung einen ersten Pfosten (4a) des Profilleistenrahmens (4) und daraufhin an einem zweiten Pfosten (4b) desselben Rahmens (4) anzuliegen, **dadurch gekennzeichnet, daß** jene Vorrichtung ferner ein erstes, im oberen Teil des zweiten Pfostens (4b) plaziertes mechanisches Schloß (13) und ein zweites im unteren Teil des zweiten Pfostens (4b) gelegenes mechanisches Schloß (15) aufweist und jene ersten und zweiten mechanischen Schlösser von demselben Elektromagneten (50) über erste (34) und zweite (32) Zugelemente gesteuert wird.

2. Vorrichtung nach Anspruch 1,
wobei die ersten und zweiten mechanischen Schlösser (13, 15) außerdem von mindestens einer manuell betätigten Sicherheitsvorkehrung gesteuert wird.

3. Vorrichtung nach Anspruch 1,
wobei mindestens eines jener auf der Innenseite des zweiten Pfostens (4a) angeordneten mechanischen Schlösser (13, 15) in der Lage ist, mit einem entsprechenden, aus dem Flügel (6) herausragenden Bolzen (38) zusammenzuwirken.

4. Vorrichtung nach Anspruch 3,
wobei mindestens eines der mechanischen Schlösser (13, 15) ein Hakenschloß ist, dessen Öffnung von jenem Elektromagneten (50) gesteuert wird.

5. Vorrichtung nach Anspruch 1,
wobei der dritte ausziehbare Arm (12) innere Federelemente aufweist, die eine Kraft gegen den Auszug ausüben.

6. Vorrichtung nach Anspruch 5,
wobei die Federelemente eine Zugfeder umfassen.

7. Vorrichtung nach Anspruch 1,
wobei die Innenseite des ersten Pfostens (4a) und eine korrespondierende Außenseite des Flügels (6) mit jeweils gegenseitig ineinandergreifenden ersten (46) und zweiten (42) Kupplungselementen ausgerüstet sind.

8. Vorrichtung nach Anspruch 7,
wobei das erste Kupplungselement mindestens einen Sitz (46) und das zweite Kupplungselement (42) mindestens ein Teil (42) aufweist, das aus dem Rand des Flügels (6) hervorragt und jenes vorstehende Teil (42) von solcher Größe ist, daß es in den Sitz (46) paßt.

## Revendications

1. Dispositif pour ouvrir et fermer une porte pouvant tourner et coulisser (2) destinée à une paroi d'un véhicule, ladite porte (2) comportant un cadre à rebord (4) et un battant mobile (6) monté à pivotement sur une paire de bras incurvés (8, 10) actionnés par une barre verticale (14) pouvant tourner autour de son propre axe, ledit battant (6) étant, de plus, raccordé à un troisième bras (12) agencé pour maintenir ledit battant (6) parallèle à la paroi latérale du véhicule pendant une partie du mouvement d'ouverture et de fermeture, ledit troisième bras (12) étant un bras extensible dont l'extension permet audit battant (6) d'exécuter une rotation partielle autour d'un axe vertical passant par les points de pivotement dudit battant (6) sur lesdits bras incurvés (8, 10), ladite rotation partielle permettant audit battant (6) d'être en contact, pendant une partie terminale du mouvement de fermeture, avec un premier chambranle (4a) du même cadre à rebord (4) et, ensuite, un second chambranle (4b) du même cadre (4), **caractérisé en ce que** ledit dispositif comprend, de plus, un premier verrou mécanique (13) situé dans la partie supérieure dudit second chambranle (4b) et un second verrou mécanique (15) placé dans la partie inférieure dudit second chambranle (4b), lesdits premier et second verrous mécaniques étant commandés par un même électro-aimant (50) à travers une première (34) et une seconde (32) tige de raccordement.

2. Dispositif selon la revendication 1 dans lequel lesdits premier et second verrous mécaniques (13, 15) sont, de plus, commandés par au moins une poignée de sûreté actionnée manuellement.

3. Dispositif selon la revendication 1, dans lequel au moins l'un desdits verrous mécaniques (13, 15), placés dans un côté intérieur dudit second chambranle (4a), est capable d'engager une broche correspondante (38) s'avançant à partir dudit battant (6).

4. Dispositif selon la revendication 3, dans lequel au moins l'un desdits verrous mécaniques (13, 15) est un verrou à fermoir, dont l'ouverture est commandée par ledit électro-aimant (50).

5. Dispositif selon la revendication 1, dans lequel ledit troisième bras extensible (12) loge à l'intérieur des moyens élastiques agencés pour exercer une force s'opposant à ladite extension.

6. Dispositif selon la revendication 5, dans lequel lesdits moyens élastiques comprennent un ressort de rappel.

7. Dispositif selon la revendication 1, dans lequel un côté intérieur dudit premier chambranle (4a) et un côté extérieur correspondant dudit battant sont dotés, respectivement, de premiers (46) et seconds (42) moyens de couplage s'engageant mutuellement.

8. Dispositif selon la revendication 7, dans lequel lesdits premiers moyens de couplage comportent au moins une embase (46) et lesdits seconds moyens de couplage (42) comportent au moins un élément (42) faisant saillie à partir du bord dudit battant (6), ledit élément en saillie (42) présentant une dimension telle qu'elle lui permette d'entrer dans ladite embase (46).
